# DEMANDE DE BREVET EUROPEEN

(11) **EP 2 981 042 A1**
(43) Date de publication de la demande: **03.02.2016**
(21) Numéro de dépôt: 15179470.8
(22) Date de dépôt: 03.08.2015
(51) Int. Cl.: H04L 29/06, H04W 12/10, G06F 21/64

(54) **PROCÉDÉ DE SIGNATURE ÉLECTRONIQUE**

(30) Priorité: 01.08.2014 FR 1457541
(71) Demandeur: Keynectis, 92130 Issy les Moulineaux (FR)
(72) Inventeur: Lakhal, Michael, 92130 ISSY LES MOULINEAUX (FR); Dupont, David, 92130 ISSY LES MOULINEAUX (FR)
(74) Mandataire: den Braber, Gerard Paul

(57) **Abrégé**

Un procédé de signature électronique implique un serveur de signature (101) (101) et un poste client (102). Le serveur de signature (101) reçoit un package de données du poste client (102): Ce package de données comprend un ensemble de données à signer et une donnée personnelle à un signataire (107), exprimant son consentement relatif à l'ensemble de données à signer. Le package de données comprend en outre un code de vérification généré à partir du package de données. Le serveur de signature (101) vérifie l'intégrité du package de données à partir du code de vérification. Le serveur de signature (101) interroge le signataire (107) pour qu'il présente une validation que l'ensemble de données puisse être signé à son nom. Suite à suite cette validation, le serveur de signature (101) signe le package de données avec une signature électronique du signataire (107).

## Description

### DOMAINE TECHNIQUE

Un aspect de l'invention concerne un procédé de signature électronique impliquant un serveur de signature et un poste client. Le procédé peut être utilisé, par exemple, pour conclure un contrat entre un organisme vendeur et une personne physique acheteur, par l'intermédiaire d'un vendeur qui dispose du poste client. D'autres aspects de l'invention concernent un serveur de signature, un poste client, un programme pour un serveur de signature, et un programme pour un poste client.

### ETAT DE LA TECHNIQUE ANTERIEURE

Un procédé de signature électronique peut impliquer un serveur de signature qui constitue une entité de confiance pour de nombreuses personnes, morales et physiques. Le serveur de signature peut ainsi disposer de différentes clés secrètes appartenant à différentes personnes. Le serveur de signature peut électroniquement signer un ensemble de données, tel qu'un document, au nom et pour le compte d'une telle personne. Le serveur de signature génère une signature électronique en utilisant une clé de signature appartenant à une personne signataire et à partir du document à signer. La signature électronique sera donc celle de la personne signataire et spécifique au document signé.

Le procédé de signature électronique peut également impliquer un poste client, qui peut communiquer avec le serveur de signature, par exemple, par l'intermédiaire du réseau Internet. Le document à signer peut être défini sur le poste client. Une fois défini, le document peut être scellé afin de garantir l'intégrité de son contenu. Le serveur de signature, en communication avec le poste client, peut revêtir le document d'une ou plusieurs signatures électroniques.

Ce processus de signature électronique peut être utilisé, par exemple, pour conclure un contrat entre un organisme vendeur et une personne physique acheteur. Cette vente de contrats se fait généralement par l'intermédiaire d'un vendeur, qui dispose du poste client mentionné dans ce qui précède. Pour effectuer une vente, qui implique signature du contrat, le vendeur s'assure que son poste client soit connecté de façon communicative au serveur de signature.

### EXPOSE DE L'INVENTION

Il existe un besoin pour une solution permettant d'entamer un processus de signature électronique dans des conditions où il n'y a pas d'accès réseau, ou lorsque l'accès réseau n'est pas suffisamment fiable ou performant.

Selon un aspect de l'invention, un procédé de signature électronique comprend:
- une étape de réception dans laquelle un serveur de signature reçoit d'un poste client:
   - un package de données comprenant:
      - un ensemble de données à signer, et
      - une donnée personnelle à un signataire exprimant son consentement relatif à l'ensemble de données à signer, et
   - un code de vérification généré à partir du package de données,
- une étape de vérification dans laquelle le serveur de signature vérifie l'intégrité du package de données à partir du code de vérification,
- une étape d'interrogation à distance dans laquelle le serveur de signature interroge le signataire pour qu'il présente une validation que l'ensemble de données puisse être signé à son nom, et
- une étape de signature dans laquelle le serveur de signature signe le package de données avec une signature électronique du signataire suite à la validation.

Un tel procédé permet, dans un premier temps, de recueillir sur un poste client opérant en mode « hors ligne » des informations nécessaires pour une signature électronique d'un document, ainsi que le consentement d'un signataire relatif au document. Ces informations et ce consentement sont ensuite scellés au moyen d'un code vérification. Ce scellement peut aussi s'effectuer en mode « hors ligne ». La signature électronique peut être apposée dans un second temps, lorsque le poste client a pu se connecter au serveur de signature. Le serveur de signature interroge le signataire pour qu'il valide l'apposition de sa signature électronique. L'invention permet donc d'entamer un processus de signature électronique dans des conditions où il n'y a pas d'accès réseau, tout en garantissant un niveau de sécurité suffisant.

Un autre aspect de l'invention concerne un programme pour un serveur de signature, ce programme comprenant des données exécutables par le serveur de signature pour l'exécution des étapes du procédé de signature tel que défini dans ce qui précède lorsque le programme est exécuté sur le serveur de signature.

Encore un autre aspect de l'invention concerne un serveur de signature comprenant un processeur programmé pour l'exécution des étapes du procédé de signature tel que défini dans ce qui précède.

Un mode de réalisation de l'invention peut comprendre une ou plusieurs des caractéristiques supplémentaires suivantes.

Un numéro d'identification peut être associé au package de données. Dans ce cas, le serveur de signature communique ce numéro d'identification au signataire lors de l'étape d'interrogation.

La validation peut nécessiter un code secret communiqué au préalable au signataire.

Le serveur de signature peut interroger le signataire par envoi d'un message électronique, tel qu'un courriel.

Le message électronique peut comprendre un lien vers une page Web de validation de signature.

Le serveur de signature peut envoyer une nouvelle notification lorsqu'aucune réponse n'a été reçue dans un délai de réponse suite à une notification précédente.

L'étape d'interrogation peut comprendre au maximum N envois de notification, N étant un nombre entier paramétrable.

Une nouvelle notification peut s'effectuer selon une fréquence paramétrable.

L'étape d'interrogation peut s'effectuer suite à un appel téléphonique par le signataire adressé à un serveur vocal interactif associé au serveur de signature, le serveur vocal interactif invitant le signataire de le transmettre une réponse indiquant la validation.

Le procédé peut comprendre une étape d'acquittement dans laquelle le serveur de signature envoie au signataire une notification d'acquittement confirmant l'étape de signature.

Le procédé peut comprendre une étape de notification dans laquelle le serveur de signature envoie au poste client une copie du package de données signé avec la signature électronique du signataire.

Le procédé peut comprendre une étape de constitution de preuve dans laquelle le serveur de signature constitue une preuve numérique relative au procédé de signature comprenant l'ensemble de données signé avec la signature électronique du signataire et au moins une notification transmise lors de l'étape d'interrogation.

Selon un encore un autre aspect de l'invention, un procédé de préparation de signature électronique comprend:
- une étape de définition dans laquelle un poste client interagit avec un utilisateur pour définir un ensemble de données à signer,
- une étape de capture de consentement dans laquelle le poste client associe à l'ensemble de données une donnée personnelle à un signataire exprimant son consentement relatif à l'ensemble de données à signer,
- une étape de scellement dans laquelle le poste client génère un code de vérification à partir d'un package de données comprenant l'ensemble de données à signer et la donnée personnelle au signataire, et
- une étape de transmission dans laquelle le poste client transmet le package de données et le code de vérification à un serveur de signature apte à mettre en oeuvre le procédé de signature tel que défini dans ce qui précède.

Un autre aspect de l'invention concerne un programme pour un poste client, ce programme comprenant des données exécutables par le poste client pour l'exécution des étapes du procédé de préparation de signature tel que défini dans ce qui précède lorsque le programme est exécuté sur le poste client.

Encore un autre aspect de l'invention concerne un poste client comprenant un processeur programmé pour l'exécution des étapes du procédé de préparation de signature tel que défini dans ce qui précède.

Le procédé de préparation de signature électronique peut comprendre :
- une étape de détection dans laquelle le poste client détecte une connexion avec le serveur de signature, et
- une étape d'interrogation locale, préalable à l'étape de transmission, dans laquelle le poste client interroge l'utilisateur pour savoir le package de données et le code de vérification doivent immédiatement être transmis au serveur de signature.

Le procédé de préparation de signature électronique peut comprendre :
- une étape de numérisation dans laquelle le poste client numérise une signature manuscrite du signataire, la donnée personnelle au signataire exprimant son consentement étant généré à partir de la signature manuscrite numérisée.

Le procédé de préparation de signature électronique peut comprendre :
- une étape de codage dans laquelle le poste client encode en base 64 la signature manuscrite numérisée, la donnée personnelle au signataire exprimant son consentement comprenant la signature manuscrite numérisée encodée.

A titre illustratif, une description détaillée de quelques modes de réalisation de l'invention est présentée dans ce qui suit en référence à des dessins annexes.

### DESCRIPTION SOMMAIRE DES DESSINS

- La figure 1 est un diagramme de blocs illustrant schématiquement une infrastructure permettant de mettre en oeuvre un procédé de signature électronique.
- La figure 2 est un organigramme illustrant schématiquement un procédé de signature électronique qui peut se dérouler dans l'infrastructure illustrée à la figure 1.
- La figure 3 est un organigramme illustrant schématiquement un procédé alternatif de signature électronique.

### DESCRIPTION DETAILLEE

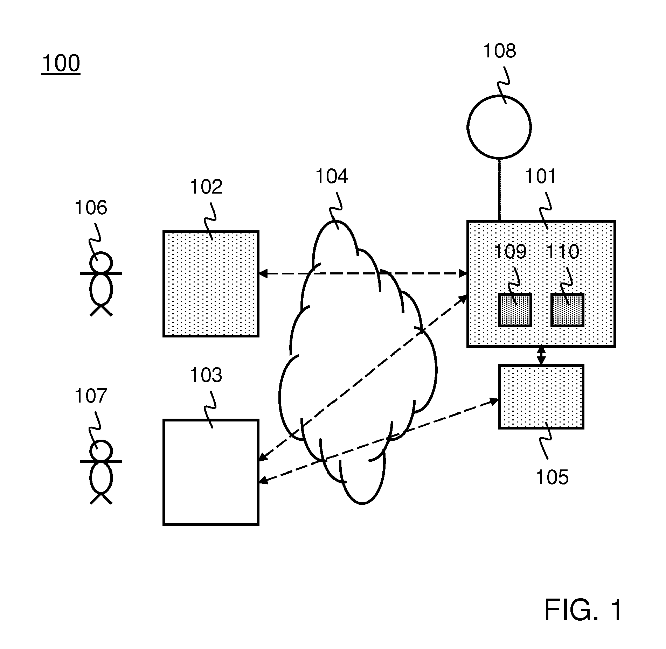

La figure 1 illustre schématiquement une infrastructure 100 permettant de mettre en oeuvre un procédé de signature électronique. L'infrastructure 100 est représente par un diagramme de blocs. L'infrastructure 100 comprend un serveur de signature 101, un poste client 102, et un dispositif de communication 103. Un ensemble de réseaux de communication 104 permet d'établir un lien de communication entre le poste client 102 et le serveur de signature 101. L'ensemble de réseaux de communication 104 permet également d'établir un lien de communication entre le dispositif de communication 103 et le serveur de signature 101. L'ensemble de réseaux de communication 104 peut comprendre qu'un seul réseau, par exemple, le réseau Internet.

L'infrastructure 100 peut en outre comprendre un serveur vocal interactif 105 associé au serveur de signature 101. Dans ce cas, l'ensemble de réseaux de communication 104 permet d'établir un lien de communication vocale entre le dispositif de communication 103 et le serveur vocal interactif 105.

Le poste client 102 peut être, par exemple, sous forme d'une tablette. Cette tablette peut appartenir, par exemple, à un vendeur 106 qui souhaite faire signer des contrats, tel qu'un contrat de souscription, un contrat de vente, ou un contrat de location. C'est-à-dire, le vendeur 106 souhaite vendre des contrats au moyen de sa tablette. Le poste client 102 sera dénommé « tablette du vendeur 102 » pour des raisons de convenance et d'illustration.

Le dispositif de communication 103 peut être, par exemple, sous forme d'un téléphone mobile intelligent (en anglais : Smartphone). Ce téléphone mobile intelligent peut appartenir à, par exemple, une personne 107 qui souhaite signer un contrat. Le dispositif de communication 103 sera dénommé « Smartphone du signataire 103 » dans ce qui suit pour des raisons de convenance et d'illustration.

Le serveur de signature 101 constitue une entité de confiance pour un organisme 108 offrant des contrats à signer. C'est-à-dire, l'organisme 108 est partie à un contrat. Le vendeur 106 peut jouer le simple rôle d'intermédiaire. Le serveur de signature 101 constitue aussi une entité de confiance pour la personne 107 souhaitant signer un contrat, qui sera dénommé « signataire 107 » dans ce qui suit pour des raisons de convenance. En tant qu'entité de confiance, le serveur de signature 101 dispose d'une clé de signature 109 appartenant à l'organisme 108 et d'une clé de signature 110 appartenant au signataire 107.

Plus en détails, le serveur de signature 101 comprend un processeur et une mémoire, qui ne sont pas représentés à la figure 1 pour des raisons de simplicité. Le processeur peut comprendre un ou plusieurs circuits de processeur apte à exécuter des instructions sous forme de codes numériques. La mémoire peut comprendre un ou plusieurs circuits de mémoire apte à stocker un programme comprenant un ensemble d'instructions exécutables par le processeur.

La tablette du vendeur 102 comprend aussi un processeur et une mémoire. Il en va de même pour le Smartphone du signataire 103. Les remarques qui précèdent s'appliquent aussi à ces processeurs et ces mémoires. La mémoire de la tablette du vendeur 102 peut comprendre un système d'exploitation tel que, par exemple, Android®, Windows 8® ou PhoneGap® ; Android, Windows 8, et PhoneGap étant des marques déposées respectivement de Google Inc., de Microsoft Corporation et d'Adobe Systems Incorporated.

La mémoire du serveur de signature 101 comprend un programme spécifiquement conçu pour mettre en oeuvre un procédé de signature électronique qui sera décrit dans ce qui suit. Ce programme sera dénommé programme de signature serveur dans ce qui suit. D'une façon correspondante, la mémoire de la tablette du vendeur 102 comprend un programme spécifiquement conçu pour mettre en oeuvre ce procédé de signature électronique. Ce programme sera dénommé programme de signature client dans ce qui suit.

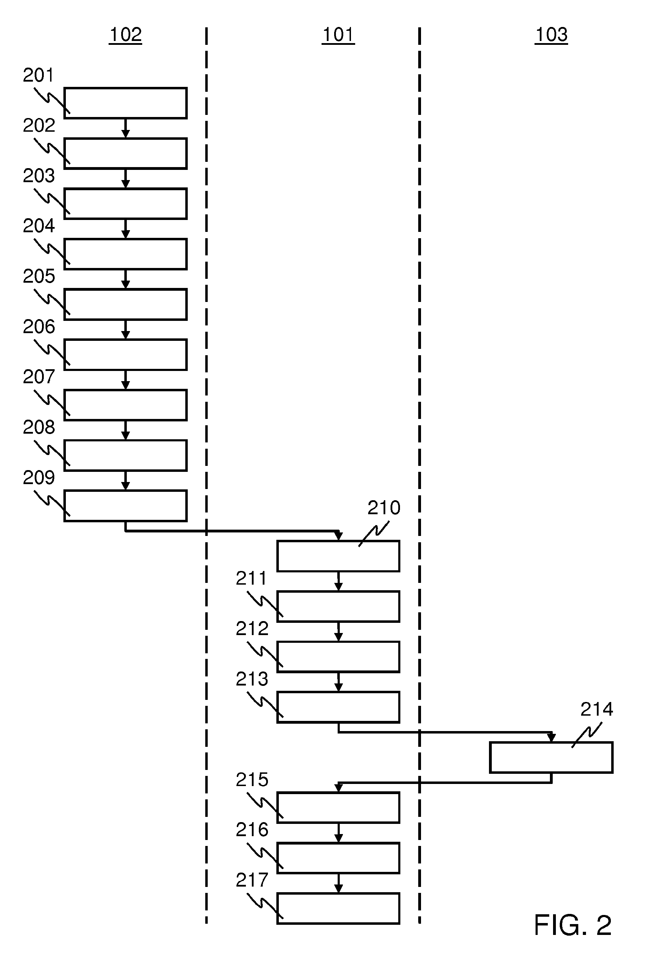

La figure 2 illustre schématiquement un procédé de signature électronique qui peut se dérouler dans l'infrastructure 100 illustrée à la figure 1. Le procédé est représenté par un organigramme. Pour des raisons de simplicité, il est supposé que le signataire 107 illustré à la figure 1 est le seul signataire d'un contrat, à part l'organisme 108 qui est aussi partie au contrat. Toutefois, un contrat peut avoir d'autres signataires. Dans ce cas, des opérations relatives au signataire 107 décrites dans ce qui suit, peuvent également être effectuées pour un tel autre signataire.

Le procédé de signature électronique comprend une série d'étapes 201 à 217, qui impliquent le serveur de signature 101, la tablette du vendeur 102, et le Smartphone du signataire 103. La figure 2 est verticalement divisée en plusieurs sections. Une section de gauche illustre différentes étapes que la tablette du vendeur 102 effectue. Une section centrale illustre différentes étapes que le serveur de signature 101 effectue. Une section de droite illustre une étape que le Smartphone du signataire 103 effectue.

La section de gauche de la figure 2 peut être considérée comme une représentation sous forme d'organigramme du programme de signature client. La tablette du vendeur 102 effectue les étapes comprises dans cette section lorsque le programme de signature client est exécuté sur son processeur. De même, la section centrale de la figure 2 peut être considérée comme une représentation sous forme d'organigramme du programme de signature serveur. Le serveur de signature 101 effectue les étapes comprises dans cette section lorsque le programme de signature serveur est exécuté sur son processeur.

Dans une étape de définition de contrat 201, la tablette du vendeur 102 affiche un modèle de contrat à personnaliser. Ce modèle peut être, par exemple, en format PDF®, PDF étant un acronyme des termes anglais « Portable Document Format » et une marque déposée d'Adobe Systems Incorporated. Le modèle de contrat peut comprendre plusieurs champs à remplir, par exemple, un champ pour spécifier le nom du signataire 107, un champ pour spécifier un numéro d'une pièce d'identité du signataire 107, un champ pour spécifier une période contractuelle, ainsi que d'autres champs pour spécifier les données personnelles et spécifiques au contrat. Le modèle peut également comprendre, par exemple, des options prédéfinies qui peuvent être sélectionnées et désélectionnées. La tablette du vendeur 102 enregistre des éléments entrés dans un champ et, le cas échéant, des options sélectionnées. Ainsi, le vendeur 106 et le signataire 107 définissent un contrat à signer sur la tablette du vendeur 102. La tablette du vendeur 102 stocke ce contrat dans sa mémoire, au moins temporairement.

Dans une étape de récapitulation du contrat 202, la tablette du vendeur 102 affiche le contrat à signer pour une vérification et une validation. A ce stade, il est encore possible de modifier le contrat. Par exemple, la tablette du vendeur 102 peut afficher le contrat à signer avec deux options sélectionnables : une option « modifier » et une option « valider ». L'option « modifier » permet un retour vers l'étape de définition de contrat 201 décrite dans ce qui précède. L'option « valider » permet de sceller le contrat à signer, et de signer ce contrat en passant par les étapes suivantes.

Dans une étape de capture de consentement 203, la tablette du vendeur 102 demande une donnée qui est personnelle au signataire 107, exprimant son consentement relatif au contrat à signer. Cette donnée personnelle peut être, par exemple, une signature manuscrite ou une empreinte, ou même une combinaison des deux. La tablette du vendeur 102 peut comprendre un dispositif apte à former une image de la signature manuscrite ou, le cas échéant, de l'empreinte. D'une façon alternative, la tablette du vendeur 102 peut être reliée à un tel dispositif.

La tablette du vendeur 102 reçoit l'image de la signature manuscrite ou, le cas échéant, de l'empreinte, sous forme numérisée. Cette image numérisée peut être, par exemple, en format JPEG, JPEG étant un acronyme des termes anglais « Joint Photographie Experts Group ». La tablette du vendeur 102 peut ensuite coder l'image numérisée en base 64.

La tablette du vendeur 102 associe au contrat à signer l'image numérisée et codée exprimant le consentement du signataire 107. Cette association résulte en un package à sceller et signer. Ce package comprenant donc le contrat, ainsi que l'image numérisée et codée de la signature manuscrite du signataire 107, ou de son empreinte, ou encore une combinaison de ces deux données personnelles et identificatrices. Cette image sera dénommée « l'expression de consentement » pour des raisons de convenance et de généralisation, car l'expression de consentement peut prendre d'autres formes.

Dans une étape de scellement 204, la tablette du vendeur 102 scelle numériquement le package comprenant le contrat et l'expression de consentement. Pour ce faire, la tablette du vendeur 102 peut générer un code de vérification à partir d'un ensemble de données présentes dans le package. Cette génération de code peut consister à calculer une valeur hash, qui constitue ainsi le code de vérification. Le code de vérification est associé au package. Le code de vérification permet de vérifier l'intégrité des données dans le package, afin de s'assurer que ces données n'ont subi aucune modification. Le package et le code de vérification y associé constituent un ensemble qui sera dénommé « package scellé » par la suite.

Dans une étape d'attribution d'identifiant 205, la tablette du vendeur 102 attribue un identifiant au package comprenant le contrat et l'expression de consentement. La tablette du vendeur 102 peut communiquer l'identifiant au vendeur 106 et au signataire 107 en affichant celui-ci. L'identifiant permet d'identifier et trouver le package, relativement facilement et rapidement, lorsque celui-ci fera l'objet d'autres opérations, et de connaitre son état. Au moins une partie de ces autres opérations seront effectuées dans d'autres entités que la tablette du vendeur 102.

L'identifiant peut être sous forme d'un code aléatoire, ou pseudo-aléatoire. La tablette du vendeur 102 peut générer ce code aléatoire, qui peut consister en une série de caractères. Cette série de caractères peut être relativement courte afin que le signataire 107 puisse facilement retenir l'identifiant. Par exemple, l'identifiant peut être une série de 6 caractères.

Dans une étape de stockage local 206, la tablette du vendeur 102 stocke le package scellé dans sa mémoire, au moins temporairement. Préalable au stockage, la tablette du vendeur 102 peut chiffrer le package scellé, au moins partiellement. Ce chiffrage peut se faire, par exemple, au moyen d'une clé de chiffrement. Une version chiffrée du package scellé est alors stockée dans la mémoire de la tablette du vendeur 102. Cela contribue à assurer une confidentialité du package.

En outre, la tablette du vendeur 102 peut stocker une copie d'une ou plusieurs fenêtres qui ont été affichées lors des étapes décrites dans ce qui précède. Ces copies peuvent être des copies écran. Ainsi, la tablette du vendeur 102 garde un historique des informations affichées et présentées au signataire 107. Cet historique permet un audit du procédé de signature électronique, qui pourrait s'avérer nécessaire ultérieurement. La tablette du vendeur 102 peut également stocker des données d'horodatage en association avec les copies des fenêtres affichées. Ces données permettent d'établir la date et l'heure à laquelle une fenêtre a été affichée. De plus, la tablette du vendeur 102 peut stocker des coordonnées géographiques permettant d'établir le lieu où les étapes décrites dans ce qui précède se sont déroulées.

Dans une étape de clôture locale 207, la tablette du vendeur 102 affiche une fenêtre informative indiquant qu'une série d'opérations « hors ligne » à pris fin dans le cadre du procédé de signature électronique. Ces opérations, décrites dans ce qui précède, sont « hors ligne » dans le sens où elles ont été effectuées par la tablette du vendeur 102 sans nécessité d'une connexion au serveur de signature 101, ou à une quelconque autre entité, par l'intermédiaire d'un réseau de communication.

La fenêtre informative peut décrire une suite d'opérations pour finaliser le procédé de signature électronique. Ainsi, le signataire 107 peut prendre connaissance des étapes qui sont encore à suivre pour finaliser sa signature définitivement. La fenêtre informative peut en outre afficher un code secret pour une validation de la signature manuscrite par une signature électronique. Cette option sera décrite plus en détails dans ce qui suit.

Les étapes décrites dans ce qui précède peuvent être effectuées « hors ligne », c'est-à-dire sans que la tablette du vendeur 102 soit connectée au serveur de signature 101. Ce cas peut se présenter, par exemple, lorsque la tablette du vendeur 102 n'a pas d'accès à un réseau la permettant d'établir un lien de communication avec le serveur de signature 101. Il se peut, par exemple, que le vendeur 106 opère en nomade et, de plus, se trouve dans une zone d'ombre où une connexion réseau n'est pas possible, ou n'est pas assurée, ou encore n'offre pas une bande passante ou une fiabilité suffisante. Le procédé de signature décrit en référence à la figure 2 permet tout de même au vendeur 106 de conclure un contrat dans ces conditions, et de faire valider ce contrat par une signature électronique.

Dans ce qui suit, il est supposé que les étapes décrites dans ce qui précède aient été établies hors ligne. Le package scellé, mentionné dans ce qui précède, n'est alors présent que dans la tablette du vendeur 102, et éventuellement dans un périphérique local. Le serveur de signature 101 ne dispose pas encore un exemplaire du package scellé et n'a donc, en principe, pas de connaissance du contrat et de l'expression de consentement. Une synchronisation de contrats est à effectuer.

Dans une étape de veille à la synchronisation 208, la tablette du vendeur 102 vérifie s'il existe une connexion réseau qui permet d'établir un lien de communication avec le serveur de signature 101 suffisamment stable, fiable et rapide. Dans le cas où une telle connexion vient d'être établie, la tablette du vendeur 102 affiche un message invitant le vendeur 106 de procéder à la synchronisation de contrats. Il est supposé que le vendeur 106 donne suite à cette invitation. L'invitation peut être considérée comme un alerte push généré automatiquement lorsqu'une connexion réseau suffisamment bonne est établie. Le vendeur 106 ayant indique que la synchronisation de contrats doit se faire, les étapes suivantes sont effectuées.

Dans une étape de synchronisation 209, la tablette du vendeur 102 transmet au serveur de signature 101 le package scellé, qui comprend le contrat et l'expression de consentement. Pour des raisons de confidentialité, cette transmission peut concerner la version chiffrée du package scellé, qui se trouve dans la mémoire de la tablette du vendeur 102, ou une autre version chiffrée. La tablette du vendeur 102 peut également transmettre d'autres packages scellés portant sur d'autres contrats conclus par l'intermédiaire du vendeur 106, et dont le serveur de signature 101 n'a pas encore reçu d'exemplaires. La tablette du vendeur 102 peut veiller à que ces transmissions s'effectuent sans erreurs, par exemple, grâce à des informations qui sont retournées par le serveur de signature 101. En cas d'erreurs dans une transmission, tablette du vendeur 102 peut retransmettre le package scellé concerné.

Dans une étape de vérification 210, le serveur de signature 101 vérifie l'intégrité du package scellé reçu. Cette vérification se fait à partir du code de vérification compris dans le package scellé. Ainsi, le serveur de signature 101 s'assure que le contrat et l'expression de consentement, aussi compris dans package scellé, n'ont subi aucune modification. Dans le cas où le serveur de signature 101 a reçu une version chiffrée du package scellé, le serveur de signature 101 procède à un déchiffrement afin d'obtenir le package scellé en clair.

Le serveur de signature 101 peut effectuer une étape de signature immédiate 211 dès que le package scellé a été reçu et son intégrité vérifié. Dans l'étape de signature, le serveur de signature 101 signe le contrat électroniquement au nom et pour le compte de l'organisme 108. Plus spécifiquement, le serveur de signature 101 génère une signature électronique à partir de la clé de signature 109 de l'organisme 108 et le package scellé. Le serveur de signature 101 appose ainsi la signature électronique de l'organisme 108 au contrat en question. Dans ce cas d'exemple, il reste encore une signature électronique à apposer : la signature électronique du signataire 107.

Dans une étape d'invitation de confirmation 212, le serveur de signature 101 transmet une notification au Smartphone du signataire 103 l'invitant à confirmer sa signature manuscrite du contrat par apposition de sa signature électronique. Cette notification d'invitation peut être sous forme d'un courriel envoyé à une adresse courriel du signataire 107. Cette adresse courriel peut être spécifiée dans le contrat. De façon alternative, le serveur de signature 101 peut obtenir l'adresse courriel en interrogeant une base de données associant cette adresse au nom du signataire 107 et éventuellement ses coordonnées présentes dans le contrat.

La notification d'invitation adressée au signataire 107 comprend l'identifiant du contrat et éventuellement un intitulé du contrat, ou d'autres informations qui permettent le signataire 107 de rapidement prendre conscience du contrat. La notification d'invitation comprend aussi des éléments permettant au signataire 107 d'autoriser le serveur de signature 101 à apposer sa signature électronique sur le contrat. Par exemple, la notification d'invitation peut comprendre un lien vers une page Web de confirmation de signature.

Le serveur de signature 101 peut effectuer l'étape d'invitation de confirmation décrite dans ce qui précède le plus rapidement possible après avoir reçu le package scellé de la tablette du vendeur 102. Toutefois, le serveur de signature 101 peut prendre en compte des créneaux d'horaires appropriés et attendre jusqu'au début du créneau horaire approprié le plus proche.

Dans une étape de gestion de relances 213, le serveur de signature 101 vérifie si le signataire 107 a donné suite à la notification d'invitation dans un délai déterminé. Dans le cas où le signataire 107 n'a pas donné suite dans ce délai, le serveur de signature 101 peut envoyer une notification de relance qui peut intégrer des éléments présents dans la notification précédente. D'une autre manière, la notification de relance peut comprendre la notification précédente en tant que pièce jointe, ou peut encapsuler la notification précédente. Pour une première relance, la notification précédente est la notification d'invitation

Le serveur de signature 101 peut être paramétré pour envoyer un nombre de relances déterminé selon un calendrier particulier. Ce paramétrage peut donc définir une fréquence et un nombre de relances.

Dans une étape de confirmation de signature 214, le Smartphone du signataire 103 reçoit et affiche la notification l'invitant à confirmer sa signature manuscrite ou, le cas échéant, reçoit une notification de relance. Pour des raisons d'illustration, il est supposé que la notification comprend le lien vers la page Web de confirmation de signature. Il est également supposé que le signataire 107 active ce lien, par exemple, par un clic ou un double clic.

Le Smartphone du signataire 103 affiche ainsi la page Web de confirmation de signature. La page Web de confirmation peut comprendre des éléments relatifs au signataire 107 et relatif au contrat comme, par exemple, la civilité, le nom, et le prénom signataire 107, l'intitulé du contrat, et l'identifiant du contrat. La page Web de confirmation peut en outre comprendre une case à cocher pour une confirmation de la signature manuscrite. Cette case peut être accompagnée d'un texte à caractère juridique. Ce texte peut préciser des conséquences juridiques de la confirmation de la signature manuscrite.

La page Web de confirmation peut comprendre un bouton de validation. Lorsque le signataire 107 clique sur le bouton, et la case à été cochée, le Smartphone du signataire 103 transmet au serveur de signature 101 un message de validation. Ce message représente la validation de la part du signataire 107, autorisant confirmation de sa signature manuscrite par sa signature électronique.

Pour une sécurité renforcée, le message de validation peut comprendre un code secret associé au contrat en question. Ce code secret sera dénommé « code secret de validation » dans ce qui suit. Le code secret de validation peut être, par exemple, un mot de passe à usage unique. La page Web de confirmation peut comprendre un champ dans lequel le signataire 107 doit entrer le code secret de validation pour inclusion dans le message de validation.

Le code secret de validation peut être défini lors des étapes de signature hors ligne effectuées par la tablette du vendeur 102, qui génèrent le package scellé. Ces étapes se déroulent dans un environnement clos, en présence du vendeur 106 et du signataire 107, et éventuellement d'autres personnes connus par ceux-ci. La tablette du vendeur 106 peut générer le code secret de validation d'une façon pseudo aléatoire et ensuite afficher ce code. D'une façon alternative, le vendeur 106 et le signataire 107 peuvent convenir qu'une série de caractères particulière constitue le code secret de validation.

En tout état de cause, le signataire 107 note le code secret de validation sur, par exemple, son Smartphone, ou sur un bout de papier, ou simplement dans sa tête, notamment lorsqu'il peut facilement retenir le code secret de validation. La tablette du vendeur 102 associe le code secret de validation au contrat en question et transmettra le code secret de validation au serveur de signature 101. Cette transmission est de préférence chiffrée.

Dans une étape de signature confirmative 215, le serveur de signature 101 reçoit le message de validation. Le message de validation autorise le serveur de signature 101 de signer le contrat électroniquement au nom et pour le compte du signataire 107. Cette autorisation peut être soumise au code secret de validation étant présent dans le message de validation. Dans ce cas, le serveur de signature 101 s'assure que le message de validation comprend un code correspondant au code secret de validation associé au contrat en question et reçu de la tablette du vendeur 102. Pour signer le contrat électroniquement, le serveur de signature 101 génère la signature électronique du signataire 107 à partir de la clé de signature 110 du signataire 107 et du package scellé. Le serveur de signature 101 appose la signature électronique du signataire 107 au contrat en question.

Le contrat est maintenant revêtu de deux signatures électroniques : la signature électronique de l'organisme 108 proposant le contrat et la signature du signataire 107. Pour des raisons de simplicité, il est supposé que ces deux signatures suffissent pour que le contrat soit valide et qu'il n'y ait aucun autre signataire.

Dans une étape de notification d'acquittement 216, le serveur de signature 101 transmet une notification d'acquittement au signataire 107. Cette notification peut être sous forme d'un courriel que le signataire 107 pourrait consulter sur son Smartphone. Pour ce faire, le serveur de signature 101 peut utiliser l'adresse de courriel auquel la notification d'invitation a été envoyée.

Le serveur de signature 101 peut aussi transmettre une notification de confirmation au vendeur 106 pour lui informer que le signataire 107 a confirmé sa signature manuscrite par sa signature électronique. Ainsi, le vendeur 106 est informé que contrat est devenu définitif. Le serveur de signature 101 peut transmettre la notification de confirmation au vendeur 106 lors d'une synchronisation de contrats telle que décrite dans ce qui précède. De façon alternative, ou complémentaire, la notification de confirmation peut aussi être sous forme d'un courriel que le vendeur 106 pourrait consulter sur sa tablette 102.

Le serveur de signature 101 peut aussi transmettre une notification d'acquittement à l'organisme 108 qui est à l'origine du contrat. Par ailleurs, le serveur de signature 101 peut envoyer des notifications à cet organisme 108 tout au long du procédé de signature électronique, l'informant ainsi de l'état actuel du procédé. Le serveur de signature 101 peut également permettre à l'organisme 108 de l'interroger sur le procédé de signature électronique afin de connaître l'état actuel.

Dans une étape de conservation de preuve 217, le serveur de signature 101 constitue un dossier d'historique relatif aux opérations décrites dans ce qui précède. Le serveur de signature 101 peut constituer le dossier d'historique au fur et à mesure du déroulement du procédé de signature électronique, par exemple, en y ajoutant un élément lorsqu'une opération a été effectuée. Le dossier d'historique peut comprendre un ensemble de messages transmis et reçus dans le cadre du procédé de signature électronique. Ces messages peuvent être horodatés. Le terme « messages » englobe diverses notifications décrites dans ce qui précède, ainsi que d'autres échanges qui ont eu lieu. Le dossier d'historique peut aussi inclure des informations relatives aux opérations effectuées localement avec des données d'horodatage. Le dossier d'historique peut ainsi constituer un fichier de preuve.

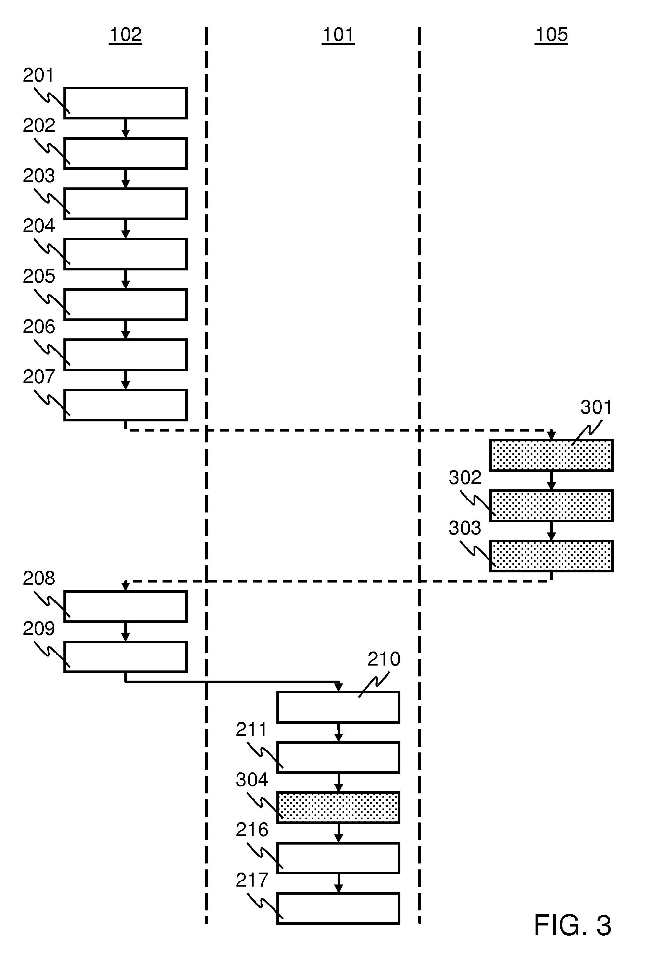

La figure 3 illustre schématiquement un procédé alternatif de signature électronique, qui implique le serveur vocal interactif 105 dans l'infrastructure 100 illustrée à la figure 1. Le procédé alternatif est représenté par un organigramme, comme la figure 2, sur laquelle quelques remarques générales ont été présentées. Ces remarques générales s'appliquent également la figure 3.

Le procédé alternatif de signature électronique comprend une première série d'étapes similaires aux étapes suivantes du procédé illustré à la figure 2 : l'étape de définition de contrat 201, l'étape de récapitulation du contrat 202, l'étape de capture de consentement 203, l'étape de scellement 204, l'étape d'attribution d'identifiant 205, étape de stockage local 206, et l'étape de clôture locale 207. A la fin de cette première série d'étapes, il existe donc un package scellé comprenant un contrat, une expression de consentement, qui peut être sous forme d'une signature manuscrite, et un code de vérification. La première série d'étapes 201 à 207 est suivie par les étapes suivantes qui caractérisent le procédé alternatif.

Dans une étape de réception d'appel téléphonique 301, le serveur vocal interactif 105 reçoit un appel téléphonique en provenance du signataire 107. Le signataire 107 peut effectuer cet appel téléphonique, par exemple, au moyen de son Smartphone. Le signataire 107 peut appeler le serveur vocal interactif 105 à la demande du vendeur 106 pour une validation de sa signature manuscrite. La fenêtre informative mentionnée dans ce qui précède et affichée sur la tablette du vendeur 102, peut comprendre une invitation adressée au signataire 107 l'invitant à appeler le serveur vocal interactif 105. La fenêtre informative peut afficher un numéro de téléphone appartenant au serveur vocal interactif 105.

Dans une étape d'identification 302, le serveur vocal interactif 105 invite le signataire 107 de spécifier l'identifiant du contrat et éventuellement l'intitulé du contrat. Par exemple, le serveur vocal interactif 105 peut demander au signataire 107 de taper une série de caractères sur son Smartphone correspondant à l'identifiant du contrat. Il en va de même pour l'intitulé du contrat. D'une manière alternative, le serveur vocal interactif 105 peut demander au signataire 107 de transmettre ces informations vocalement en prononçant l'identifiant du contrat et l'intitulé du contrat. Le serveur vocal interactif 105 peut comprendre un module de reconnaissance vocale permettant de convertir ces informations vocales en caractères représentés par des codes numériques.

Le serveur vocal interactif 105 peut demander au signataire 107 de lui transmettre d'autres informations telle que, par exemple, son nom et son prénom, ainsi que d'autres informations personnelles au signataire 107, ainsi que d'autres informations relatives au contrat. Le serveur vocal interactif 105 peut reproduire vocalement les informations reçues afin que le signataire 107 puisse vérifier qu'il n'y ait aucune erreur dans ces informations, qui seront enregistrés par le serveur vocal interactif 105.

Dans une étape de confirmation téléphonique 303, le serveur vocal interactif 105 invite le signataire 107 d'indiquer s'il souhaite valider le contrat en question par sa signature électronique, ou non. Par exemple, le serveur vocal interactif 105 peut instruire le signataire 107 de taper sur une touche comprenant le chiffre « 1 » s'il souhaite cette validation, et de taper sur une touche comprenant le chiffre « 0 » s'il souhaite abandonner le processus de signature électronique. Le signataire 107 donne une réponse et le serveur vocal interactif 105 enregistre cette réponse. Le serveur vocal interactif 105 transmet la réponse au serveur de signature 101 avec les informations permettant d'identifier le contrat. Dans ce qui suit, il est supposé que la réponse est positive ; le signataire 107 a indiqué qu'il souhaite valider le contrat en question par sa signature électronique.

L'étape de confirmation téléphonique 303 peut être suivie par une seconde série d'étapes similaires aux étapes suivantes du procédé illustré à la figure 2 : l'étape de veille à la synchronisation 208 et l'étape de synchronisation 209 effectuées par la tablette du vendeur 102, et l'étape de vérification 210 et l'étape de signature immédiate 211 effectuée par le serveur de signature 101. A la fin de cette seconde série d'étapes 208 à 211, le serveur de signature 101 dispose du contrat revêtu de la signature électronique de l'organisme 108. Comme dans le procédé illustré à la figure 2, il reste encore au moins une signature électronique à apposer : la signature électronique du signataire 107. C'est sur ce point aussi où le procédé alternatif illustré à la figure 3 se distingue du procédé illustré à la figure 2.

Dans le procédé alternatif, le serveur de signature 101 a déjà reçu au préalable du signataire 107 une confirmation de validation, l'autorisant à apposer sa signature électronique au contrat. Par contraste, dans le procédé illustré à la figure 2, le serveur de signature 101 ne dispose pas encore de cette confirmation de validation. Le serveur de signature 101 doit l'obtenir par les étapes suivantes : l'étape d'invitation de confirmation 212, l'étape de gestion de relances 213, l'étape de confirmation de signature 214, et l'étape de signature confirmative 215. Ces étapes 212 à 215 ne sont pas nécessaires dans le procédé alternatif illustré à la figure 3. Ces étapes 212 à 215 sont, en effet, remplacées par l'étape suivante.

Dans une étape de signature confirmative immédiate 304, le serveur de signature 101 signe le contrat électroniquement au nom et pour le compte du signataire 107. Plus spécifiquement, le serveur de signature 101 génère la signature électronique du signataire 107 à partir de la clé de signature 110 du signataire 107 et du package scellé. Le serveur de signature 101 appose ainsi la signature électronique du signataire 107 au contrat en question.

En effet, le serveur de signataire 107 est autorisé de procéder ainsi par la confirmation de validation reçue au préalable par l'intermédiaire du serveur vocal interactif 105. Le serveur de signature 101 peut donc effectuer l'étape de signature confirmative immédiate 304 dès la réception du package scellé en provenance de la tablette du vendeur 102. L'étape de signature confirmative immédiate 304 peut donc suivre immédiatement après l'étape de synchronisation 209 et l'étape de vérification 210.

Le procédé alternatif de signature électronique illustrée à la figure 3 est particulièrement adapté au cas où le vendeur 106 souhaite finaliser immédiatement sa vente dans un lieu où une connexion réseau n'est pas possible, l'empêchant de réaliser la synchronisation de sa tablette.

L'étape de signature confirmative immédiate 304 peut être suivie par une troisième série d'étapes similaires aux étapes suivantes du procédé illustré à la figure 2: l'étape étape de notification d'acquittement 216 et l'étape de conservation de preuve 217. Une synchronisation de contrats opérée entre le serveur de signature 101 et la tablette du vendeur 102 permet au vendeur 106 de disposer d'une version finale du contrat.

Le signataire 107 peut obtenir la version finale du contrat de la façon suivante. Le signataire 107 peut disposer d'un espace client sur un site appartenant à l'organisme 108 avec qui il a signé le contrat. Dans ce cas, l'organisme 108 peut mettre la version finale du contrat à la disposition du signataire 107 dans son espace client sur le site en question. Le signataire 107 peut ainsi consulter la version finale du contrat et éventuellement la télécharger s'il le souhaite.

### NOTES

La description détaillée en référence aux dessins n'est qu'une illustration de quelques modes de réalisation de l'invention. L'invention peut être réalisée de nombreuses façons différentes. Afin d'illustrer ceci, quelques alternatives sont indiquées sommairement.

L'invention peut être appliquée dans de nombreux types de procédés de signature électronique. Par exemple, l'invention peut être appliquée pour faire signer un ensemble de données qui ne nécessitent qu'une seule signature. Par exemple, l'ensemble de données peut constituer une déclaration à signer par une personne physique ou un seul représentant d'une personne morale.

Un procédé de signature électronique conforme à l'invention peut impliquer plusieurs signataires dont chacun doit valider une apposition d'une signature électronique. Dans ce cas, le serveur de signature peut interroger chaque signataire pour obtenir sa validation. Par exemple, dans le procédé illustré à la figure 2, le serveur de signature peut effectuer les étapes suivantes pour chaque signataire : l'étape d'invitation de confirmation 212, l'étape de gestion de relances 213, l'étape de confirmation de signature 214, et l'étape de signature confirmative 215. De même, dans le procédé alternatif illustré à la figure 3, le serveur de signature peut effectuer les étapes suivantes pour chaque signataire : l'étape de réception d'appel téléphonique 301, l'étape d'identification 302, l'étape de confirmation téléphonique 303, et l'étape de signature confirmative immédiate 304.

Un procédé de signature électronique conforme à l'invention peut comprendre une série d'étapes telles qu'illustrée à la figure 2, ou à la figure 3, mais effectuées dans un ordre différent de celui présenté dans ces figures. Par exemple, en référence à la figure 3, l'étape de signature confirmative immédiate peut précéder l'étape de signature immédiate. Un autre exemple concerne l'étape de conservation de preuve qui comprend des opérations pouvant être effectuées tout au long du procédé de signature électronique.

Un procédé de signature électronique conforme à l'invention peut être effectué dans une infrastructure différente de celle illustrée à la figure 1. Par exemple, le signataire peut disposer de différents dispositifs de communication. Le signataire peut disposer d'un ordinateur, ou un appareil similaire, permettant un accès Internet ainsi qu'un téléphone portable classique ne permettant pas cet accès. En référence au procédé alternatif illustré à la figure 3, l'étape de réception d'appel téléphonique 301, l'étape d'identification 302, et l'étape de confirmation téléphonique 303, peuvent impliquer des communications entre le serveur de signature et le téléphone portable classique du signataire. Le signataire peut utiliser son ordinateur pour consulter la version finale du contrat signé électroniquement.

De façon générale, il existe de nombreuses fonctions qui peuvent être réalisées au moyen de matériel (en anglais: hardware) ou de logiciel (en anglais: software), ou une combinaison des deux. Une description d'une réalisation au moyen d'un logiciel n'exclut pas une réalisation au moyen d'un matériel, et vice versa. Des réalisations hybrides, qui comprennent un ou plusieurs circuits dédiés, ainsi qu'un ou plusieurs processeurs convenablement programmés, sont également possibles.

Il existe plusieurs façons de stocker et de distribuer un programme, c'est-à-dire un ensemble d'instructions, qui permet un procédé de signature électronique conforme à l'invention. Par exemple, le programme peut être stocké sur un support lisible par machine, tel que, par exemple, un disque magnétique, un disque optique ou un circuit de mémoire. Un support lisible par machine, dans lequel le programme est stocké, peut être fourni en tant que produit individuel, ou conjointement avec un autre produit, qui peut exécuter le programme. Un tel support peut également faire partie d'un produit qui permet au programme d'être exécuté. Le programme peut également être distribué via des réseaux de communication, qui peuvent être filaires, sans fil ou hybrides. Par exemple, le programme peut être distribué via Internet. Le programme peut être mis à disposition pour téléchargement par l'intermédiaire d'un serveur. Le téléchargement peut faire l'objet d'un paiement. L'utilisation du programme peut faire l'objet de l'une des trois conditions d'utilisation suivante : utilisation gratuite, utilisation après achat du programme et utilisation par abonnement payant.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclut pas la présence d'une pluralité de tels éléments ou de telles étapes.

## Revendications

1. Procédé de signature électronique comprenant:
- une étape de réception (209) dans laquelle un serveur de signature (101) reçoit d'un poste client (102):
- un package de données comprenant:
- un ensemble de données à signer,
- une donnée personnelle à un signataire (107) exprimant son consentement relatif à l'ensemble de données à signer,
- un code de vérification généré à partir du package de données,
- une étape de vérification (210) dans laquelle le serveur de signature vérifie l'intégrité du package de données à partir du code de vérification,
- une étape d'interrogation à distance (212, 213) dans laquelle le serveur de signature interroge le signataire pour qu'il présente une validation que l'ensemble de données puisse être signé à son nom, et
- une étape de signature (215) dans laquelle le serveur de signature signe le package de données avec une signature électronique du signataire suite à la validation.

2. Procédé selon la revendication 1, dans lequel un numéro d'identification est associé au package de données, le serveur de signature (101) communiquant le numéro d'identification au signataire (107) lors de l'étape d'interrogation.

3. Procédé selon l'une quelconque des revendications 1 et 2, dans lequel la validation nécessite un code secret communiqué au préalable au signataire (107).

4. Procédé selon l'une quelconque des revendications 1 à 3, dans lequel le serveur de signature (101) interroge le signataire (107) par envoi d'un message électronique.

5. Procédé selon la revendication 4, dans lequel le message électronique comprend un lien vers une page Web de validation de signature.

6. Procédé selon l'une quelconque des revendications 1 à 5, dans lequel, dans l'étape d'interrogation (212, 213), le serveur de signature (101) envoie une nouvelle notification lorsqu'aucune réponse n'a été reçue dans un délai de réponse suite à une notification précédente.

7. Procédé selon la revendication 6, dans lequel l'étape d'interrogation (212, 213) comprend au maximum N envois de notification, N étant un nombre entier paramétrable.

8. Procédé selon l'une quelconque des revendications 6 et 7, dans lequel une nouvelle notification s'effectue selon une fréquence paramétrable.

9. Procédé selon l'une quelconque des revendications 1 à 3, dans lequel l'étape d'interrogation s'effectue suite à un appel téléphonique par le signataire (107) adressé à un serveur vocal interactif (105) associé au serveur de signature (101), le serveur vocal interactif invitant le signataire de le transmettre une réponse indiquant la validation.

10. Procédé selon l'une quelconque des revendications 1 à 9, comprenant une étape d'acquittement (216) dans laquelle le serveur de signature (101) envoie au signataire (107) une notification d'acquittement confirmant l'étape de signature (215).

11. Procédé selon l'une quelconque des revendications 1 à 10, comprenant une étape de notification dans laquelle le serveur de signature (101) envoie au poste client (102) une copie du package de données signé avec la signature électronique du signataire (107).

12. Procédé selon l'une quelconque des revendications 1 à 11, comprenant une étape de constitution de preuve (217) dans laquelle le serveur de signature (101) constitue une preuve numérique relative au procédé de signature comprenant l'ensemble de données signé avec la signature électronique du signataire (107) et au moins une notification transmise lors de l'étape d'interrogation (213, 214).

13. Procédé de préparation de signature électronique comprenant:
- une étape de définition (201) dans laquelle un poste client (102) interagit avec un utilisateur (106) pour définir un ensemble de données à signer,
- une étape de capture de consentement (203) dans laquelle le poste client associe à l'ensemble de données une donnée personnelle à un signataire (107) exprimant son consentement relatif à l'ensemble de données à signer,
- une étape de scellement (204) dans laquelle le poste client génère un code de vérification à partir d'un package de données comprenant l'ensemble de données à signer et la donnée personnelle au signataire, et
- une étape de transmission (209) dans laquelle le poste client transmet le package de données et le code de vérification à un serveur de signature (101) apte à mettre en oeuvre le procédé de signature selon l'une quelconque des revendications 1 à 12.

14. Procédé selon la revendication 13, comprenant :
- une étape de détection (208) dans laquelle le poste client (102) détecte une connexion avec le serveur de signature (101), et
- une étape d'interrogation locale, préalable à l'étape de transmission (209), dans laquelle le poste client interroge l'utilisateur (106) pour savoir si le package de données et le code de vérification doivent immédiatement être transmis au serveur de signature.

15. Procédé selon l'une quelconque des revendications 13 et 14, comprenant :
- une étape de numérisation dans laquelle le poste client (102) numérise une signature manuscrite du signataire (107), la donnée personnelle au signataire exprimant son consentement étant généré à partir de la signature manuscrite numérisée.
